# EUROPEAN PATENT APPLICATION

(11) **EP 1 947 402 A1**
(43) Date of publication of application: **23.07.2008**
(21) Application number: 07000987.3
(22) Date of filing: 18.01.2007
(51) Int. Cl.: F24J 2/52, H01L 31/042

(54) **Support frame for solar panels**

(71) Applicant: Aplisun Develop, S.L., 08211 Castellar del Vallés Barcelona (ES)
(72) Inventor: Moreno Calderón, Antonio, 08211 Castellar del Vallés Barcelona (ES)
(74) Representative: Maldonado Jordan, Julia

(57) **Abstract**

The support frame is made up of: Some inclined spars (1), fixed on feet (2), some transversal cross members (3) assembled at different heights on the spars (1) by means of some intermediary pieces (4) that can be coupled by pressure, and some clamps (5) that can be pressure fixed onto any point of the cross members (3) to make the fixing of solar panel frames (6) of different dimensions. The intermediate piece (4) has some lower coupling tabs (42) to fix into a groove (11) in the spar (1) and an upper channel (41) for the coupling of a cross member (3). The clamp (5) has some lower tabs (51) for fixing into a groove (31) of the cross members (3) and a side mouth for the holding of the solar panel frame (6).

## Description

### Object of the Invention

The present invention refers to a support frame for solar panels, for multiple uses with different sized panels.

### Background to the Invention

The panels to absorb solar energy, preferably photo-voltaic panels, are made from a fixed frame and anchoring onto a stable support element, such as a frame.

The frame is made mainly of some feet or support elements, onto which there is a framework of profiles, onto which the photo-voltaic panels are fixed by means of some clamps that grip a peripheral part of same.

These frames are fitted to the upper parts of buildings, such as terraces and roofs, in order to ensure good exposure to the sun. The common solar photo-voltaic panels are rectangular, but their dimensions are not standardised, so the frames must be made in an individualised manner for each installation, hence standard assemblies cannot be made.

In addition, said frames are assembled by means of nuts and bolts, which means considerable complexity in assembly and the risk of positioning mistakes. Even the panel fixing staples are held by means of bolts housed in openings that have to be appropriately calculated. This operation means that a lot of machining and drilling has to be carried out, mainly during the assembly at the installation site, with the consequent increase in working time for the installer and the lack of precision outside of the workshop.

### Description of the Invention

The solar panel support frame, of this invention, has some technical peculiarities aimed at improving its construction and making the 'in situ' installation easier, in a completely adjustable way and without the need to use fixing nuts and bolts, nor the need to make holes or machining for the positioning of the photo-voltaic panel support elements.

The frame is comprised of an intermediary piece for the joining of some cross members on some long spars. Said intermediary piece has some means of pressure coupling at any point along the length of the spar. There is a transversal channel defined on the upper part of the intermediary piece for the fixing of the cross member at any point along its length. In this way it is easier to fix the cross member in the required position, as a result of not having to make holes or machining.

The clamp is made from a flat body, that has some means of pressure coupling on its lower part for its positioning on any point of the length of the cross member, there being a wing being made on the upper part of the clamp that forms a horizontal U-shaped opening, to shackle the lower surface or platen of the frame.

In this way it is easier to adjust the position of the clamps to the long spar of the cross members in any position, and to fix them without fixing elements that need holes drilling, such as bolts or similar elements.

The means of pressure fitting between the long beam and the intermediate piece, or between the cross member and the clamp, are made up of a U-shaped groove in the upper surface of the long spar, or the cross member, and some noticeably parallel tabs arranged on the lower part of the intermediate piece, or the clamp, that fit together by means of respective veins facing each other, that are defined respectively on the side walls of the groove and the tabs.

The intermediate piece has a longitudinal sliding guide on the upper channel, for example a T-shaped longitudinal profile, dovetail or similar, where the adjacent cross member is fitted by means of some complementary guides on its lower part.

The clamp has an elbow shape on the internal face of the wing converging towards the mouth of the opening of the platen of the photo-voltaic panel frame. Said internal face of the wing has a series of small holding teeth on the stated edge of the frame profile.

It has been provisioned that the clamp wing can have some longitudinal rebates on its upper part to lessen its weight and to make it easier to fix the adjacent panel and giving greater flexibility.

In this way a construction is achieved that has a completely flexible configuration, as the cross members can be fitted at any height on the long spars, in order to adapt it to the construction of the panels and their arrangement. In addition, said assembly is made without the need of tools or the need to make any holes that weaken the elements of said structures.

The intermediate piece and the clamp are made from a material that can be shaped and that has a certain degree of elasticity, such as a polyamide plastic or resin which makes its fitting to the spars, cross members and support frames easier.

### Description of the Figures

In order to complete the description that is being made and for the purpose of providing a better understanding of its characteristics, a set of drawings is attached to this present description in which the figures being by way of illustration and are not by way of limitation on the invention, in which the following is shown:

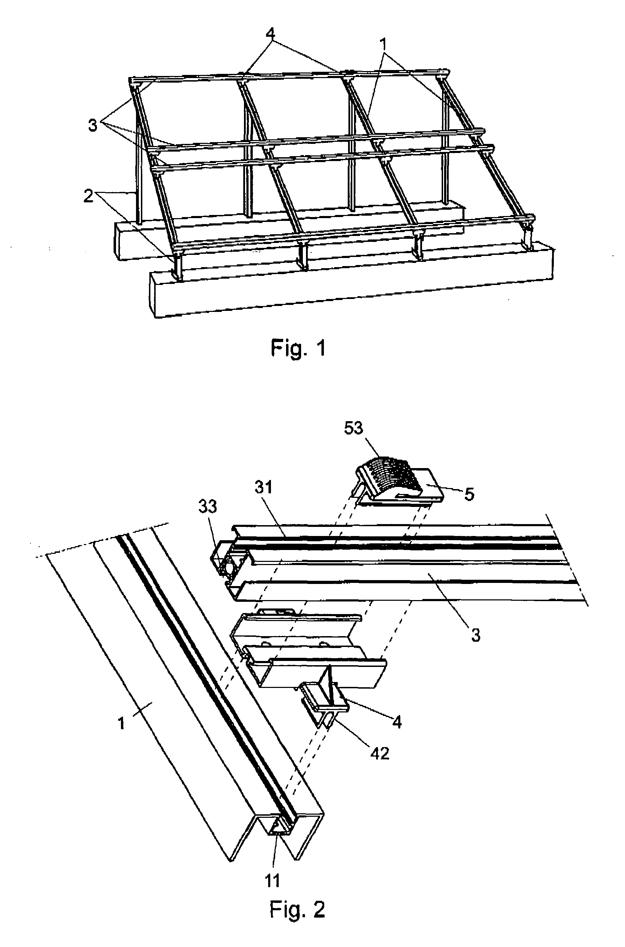

- Figure 1 shows a perspective view of the frame of the new invention.
- Figure 2 shows an exploded view in detail of the union of a set of different pieces of the frame.

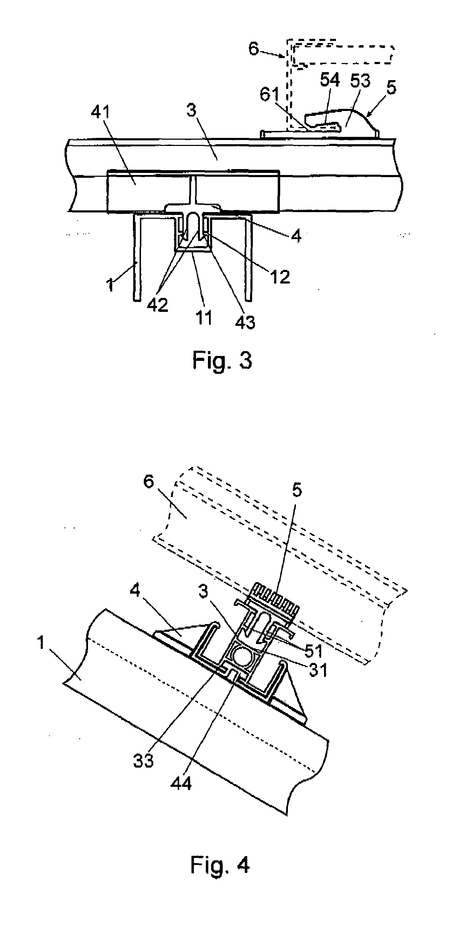

- Figure 3 shows a detailed view of the assembly of the solar panel on the frame, showing the coupling of the intermediate piece on the long spar.
- Figure 4 shows a side view of the assembly of the above figure.

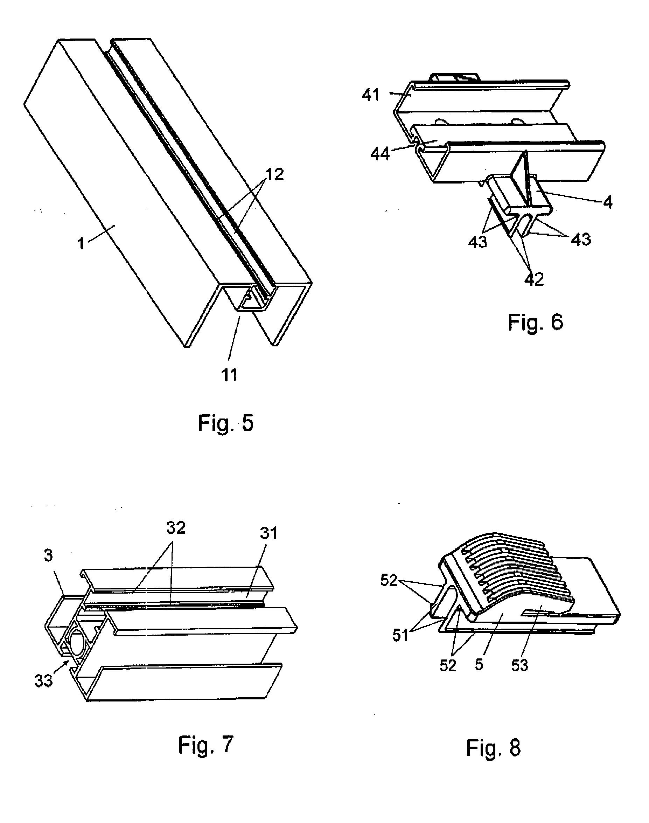

- Figure 5 shows a perspective view of a fragment of the spar.
- Figure 6 shows a perspective view of the intermediate piece.
- Figure 7 shows a perspective view of a fragment of the cross member.
- Figure 8 shows a perspective view of a clamp.

### Preferred embodiment of the invention

As can be seen from the referred to figures the frame is made up from some inclined spars (1), fixed on support feet (2), for example by means of bolts, there being some cross members (3) on the spars (1) by means of some intermediate coupling pieces (4) that can be moved along the entire length.

These intermediate pieces (4) are fixed to the spars (1) by means of quick fit pressure couplings without the need to use tools. The cross members (3) are arranged on the said intermediate pieces (4) by slides. There are a series of clamps (5) on the cross members (3) to fix the solar panels (6) by the tab (61) or inner edge of the frame of same.

The intermediate piece (4) and the clamp (5) are made from a material that can be moulded and that has a certain degree of elasticity, such as polyamide plastic or resin.

The spar (1) has a 'U' shaped section and the upper face has a 'U' shaped groove (11) on the walls of which there are some longitudinal veins (12) for the adjustment of the intermediate piece (4).

The intermediate piece (4) has an upper channel (41) and the pressure coupling devices arranged on the bottom under a transversal plate to said upper channel (41). The pressure coupling devices are made from some appreciably parallel tabs (42) that have some coupling veins (43) to connect to the veins (12) of the groove (11) of the spar (1), making both pieces immovable. The inner part of the upper channel (41) has a 'T' shaped longitudinal profile (44) with a minimal height and its edges with a 'C' shaped elbow shape. There are some reinforcing plates on both sides of the channel (41).

The cross member (3) has a double opposing 'C' shaped section, making a 'U' shaped groove (31) on the upper part where the side walls have some longitudinal veins (32) for the adjustment of the clamp (5). In turn, the lower face of the cross member (3) has a complementary longitudinal guide (33), whose arrangement is adapted to the profile (44) of the 'T' shape of the intermediate piece (4).

The clamp (5) is made up of a plate under which there are two parallel tabs (51) with some longitudinal lateral veins (52), for fitting to the veins (32) of the groove (31) of the cross member (3). In the upper part of the clamp (5) plate, there is a fixing wing (53) of the tab (61) of the panel frame (6). This wing (53) is turned on its side, the opening forming a 'U' to shackle same. The wing (53) converges towards the open mouth of the clamp (5), where the inside face (54) of said tab (61) has a series of small transversal locking teeth.

Once having sufficiently described the nature of the invention, likewise having given a preferred embodiment it is placed on record that the materials, shape, size and arrangement of the elements described can be modified provided that they do not mean an alteration of the basic essentials of the invention that are claimed below.

## Claims

1. Support frame for solar panels, being of the type that has some legs (2) or support elements, **characterised in that** it is made up of some inclined spars (1) fixed onto the feet (2), some transversal cross members (3) assembled at different heights on the spars (1), some intermediary pieces (4) coupling onto the spars (1), said intermediary pieces (4) having some pressure coupling devices to the spars (1), where they can be positioned at any point along their length, the upper part of the intermediate piece (4) having a transversal fixing channel (41) that can be moved on the cross member (3); and some solar panel (6) fixing clamps (5) made from a flat body that have some pressure coupling devices on their lower part to fit to the cross member (3), there being a wing (53) on the upper part of the clamp (5) that forms a horizontal 'U' shaped opening to shackle the lower tab (61) of the panel frame (6).

2. Support frame, according to Claim 1, **characterised in that** the means of pressure fitting between the long spar (1) and the intermediate piece (4), or between the cross member (3) and the clamp (5), are made up of a U shaped groove(11 & 31) in the upper surface of the long spar (1), or the cross member (3), and some noticeably parallel tabs (42 & 51) arranged on the lower part of the intermediate piece (4), or the clamp (5), that fit together by means of respective veins (12, 32, 43 & 52) facing each other, that are defined respectively on the side walls of the grooves (11 & 31) and the tabs (42 & 51).

3. Support frame, according to Claim 1, **characterised in that** the intermediate piece (4) has a longitudinal 'T' shaped, dovetail or similar profile (44) in the upper channel (41) on which there is the adjacent cross member (3) by means of at least one complementary guide (33) defined on the lower and /or side part.

4. Support frame, according to Claim 1, **characterised in that** the intermediate piece (4) and the clamp (5) are made from a material that can be moulded and that has a certain degree of elasticity, such as polyamide plastic or resin.

5. Support frame, according to Claim 1, **characterised in that** the wing (53) of the clamp (5) has a series of small teeth or grooves on the inner face (54) converging with the main flat body towards the open mouth.
